# EUROPÄISCHE PATENTSCHRIFT

(11) **EP 2 888 803 B1**
(45) Veröffentlichungstag und Bekanntmachung des Hinweises auf die Patenterteilung: **16.11.2022**
(21) Anmeldenummer: 13752872.5
(22) Anmeldetag: 08.08.2013
(51) Int. Cl.: H02K 5/128, H02K 1/278, H02K 1/30

(54) **HAUSGERÄT MIT EINEM ELEKTRISCHEN ANTRIEBSMOTOR, DER EINEN PERMANENTMAGNETROTOR UMFASST**
HOME APPLIANCE WITH ELECTRIC DRIVE MOTOR COMRPISING A PERMANENT MAGNET ROTOR
APPAREIL DOMESTIQUE AVEC MOTEUR ELECTRIQUE D'ENTRAÎNEMENT COMPRENANT UN ROTOR À AIMANTS PERMANENTS

(30) Priorität: 22.08.2012 DE 102012214934
(43) Veröffentlichungstag der Anmeldung: 01.07.2015
(73) Patentinhaber: BSH Hausgeräte GmbH, 81739 München (DE)
(72) Erfinder: BÖTTGER, Torsten, 01445 Radebeul (DE); KALAVSKY, Michal, 04023 Kosice (SK); SKRIPPEK, Jörg, 14641 Wustermark (DE); VALO, Robert, 07101 Michalovce (SK)
(86) Internationale Anmeldenummer: PCT/EP2013/066615
(87) Internationale Veröffentlichungsnummer: WO 2014/029629

(56) Entgegenhaltungen:
- EP-A1- 1 533 883
- EP-A1- 1 788 690
- EP-A2- 2 112 743
- DE-A1-102008 012 628
- DE-A1-102010 005 963
- US-A- 4 973 872

## Beschreibung

Die Erfindung betrifft ein Hausgerät mit einer als elektrischer Antriebsmotor ausgebildeten elektrischen Maschine, mit einem Rotor, der ein drehbar gelagertes Rotorjoch sowie eine Mehrzahl von Permanentmagneten aufweist, die an einer Außenoberfläche des Rotorjochs angeordnet sind. Ferner betrifft die Erfindung ein Hausgerät, insbesondere ein Hauskältegerät oder einen Geschirrspüler oder eine Waschmaschine, mit einer derartigen, als elektrischer Antriebsmotor ausgebildeten elektrischen Maschine.

Elektrische Maschinen, insbesondere elektrische Antriebsmotoren, mit Permanentmagneten sind bekannt. Die Permanentmagnete können durch Vergießen mit einem aushärtenden Kunststoffmaterial der Permanentmagnete an dem Rotorjoch befestigt werden. Jedoch nimmt das ausgehärtete Kunststoffmaterial Bauraum in Anspruch, was den Luftspalt zwischen dem Rotor und dem Stator der elektrischen Maschine vergrößert. Dies führt zu einem höheren magnetischen Widerstand und damit zu einer geringeren Effizienz der elektrischen Maschine. Darüber hinaus ist die mechanische Stabilität des ausgehärteten Kunststoffmaterials begrenzt, sodass sich das Vergießen der Permanentmagnete nur für langsam laufende elektrische Maschinen oder für elektrische Maschinen mit einem kleinen Rotordurchmesser eignet.

Alternativen sind die Befestigung der Permanentmagnete durch Klebstoff, eine Glasfaserbandage oder eine Kombination aus Klebstoff und einer Glasfaserbandage. Klebstoffschichten haben nur einen geringen Einfluss auf die Effizienz einer elektrischen Maschine. Die Zugbelastung derartiger Klebstoffverbindungen ist auch für schnell laufende elektrische Maschinen ausreichend, jedoch nicht für elektrische Maschinen, die als Permanentmagnete Ferritmagnete aufweisen. Bei derartigen elektrischen Maschinen können die wirkenden Zentrifugalkräfte den Rotor zerstören.

Die Verwendung einer Glasfaserepoxidbandage erfordert eine größere Schichtdicke, um eine ausreichende Fixierung der Permanentmagnete sicherzustellen. Dies erfordert eine Vergrößerung des Luftspalts und führt daher zu einer geringeren Effizienz der elektrischen Maschine.

Die EP 1 788 690 A1 beschreibt einen Permanentmagnetrotor für eine Pumpe einer Waschmaschine. Die Permanentmagnete sind mit einer Ummantelung aus Kunststoffmaterial versehen.

In der US 4 973 872 A ist ein Rotor eines elektrischen Motors gezeigt, der mehrere Permanentmagnete aufweist. Die Permanentmagnete sind in einen Kunststoffmantel eingebettet.

In der EP 1 533 883 A1 ist ein Haushaltsgerät mit einem elektrischen Antriebsmotor gezeigt, der ein drehbar gelagertes Rotorjoch mit einer Vielzahl von außen angeordneten Permanentmagneten aufweist. Die Permanentmagnete sind von einer Ummantelung aus einem nichtmagnetischen Material, Stahlblech oder Edelstahl umgeben.

Es ist daher die der Erfindung zugrundeliegende Aufgabe ein Hausgerät mit einer als elektrischer Antriebsmotor ausgebildeten elektrischen Maschine, mit verbesserter Effizienz bereitzustellen.

Diese Aufgabe wird durch den Gegenstand mit den Merkmalen nach dem unabhängigen Anspruch gelöst. Vorteilhafte Weiterbildungen sind Gegenstand der abhängigen Ansprüche, der Beschreibung sowie der Zeichnungen.

Die vorliegende Erfindung basiert auf der Erkenntnis, dass durch eine zusätzliche mechanische Fixierung der Mehrzahl der Permanentmagneten der Luftspalt klein gehalten und so die Effizienz der elektrischen Maschine gesteigert werden kann.

Gemäß einem ersten Aspekt wird die erfindungsgemäße Aufgabe dadurch gelöst, dass eine Ummantelung die Mehrzahl der Permanentmagnete umschließt um eine auf die Mehrzahl der Permanentmagnete bei einer Rotation des Rotorjochs einwirkbare Zentrifugalkraft zumindest teilweise zu kompensieren. Dadurch wird der technische Vorteil erreicht, dass der Luftspalt zwischen dem Rotor und dem Stator reduziert werden kann. Dies erhöht die Effizienz einer derartigen elektrischen Maschine.

Die Ummantelung ist aus dem nicht-magnetischen Material Stahlblech oder Edelstahl, geformt. Dadurch wird der technische Vorteil erreicht, dass durch die Ummantelung der Feldlinienverlauf der magnetischen Feldlinien der Permanentmagneten nicht verändert wird. So wird die Effizienz einer derartigen rotierenden elektrischen Maschine nochmals gesteigert.

In einer vorteilhaften Ausführungsform ist die Ummantelung eine Zylinderhülse, welche die Mehrzahl der Permanentmagnete umschließt. Dadurch wird der technische Vorteil erreicht, dass die Ummantelung besonders einfach zu fertigen ist.

In einer vorteilhaften Ausführungsform umschließt die Ummantelung unter Presspassung die Mehrzahl der Permanentmagnete. Dadurch wird der technische Vorteil erreicht, dass die Ummantelung die Mehrzahl der Permanentmagnete sicher fixiert und die Ummantelung selber ohne Befestigungsmittel, wie z.B. Schrauben oder Nieten, am Rotorjoch befestigt ist, was die Fertigung vereinfacht.

In einer vorteilhaften Ausführungsform ist die Ummantelung an einer Stirnseite radial auswärts erweitert. Dadurch wird der technische Vorteil erreicht, dass die Montage der Ummantelung durch Aufschieben der Ummantelung in Richtung der Drehachse des Rotors vereinfacht wird.

In einer vorteilhaften Ausführungsform überdeckt die Ummantelung die Mehrzahl von Permanentmagneten vollständig. Dadurch wird der technische Vorteil erreicht, dass die Mehrzahl der Permanentmagneten besonders sicher fixiert ist. So wird eine elektrische Maschine mit einer besonders langen Lebensdauer bereitgestellt.

Die Mehrzahl der Permanentmagnete ist auf der Außenoberfläche des Rotorjochs stoffschlüssig befestigt. So ist die Mehrzahl der Permanentmagnete mittels einer Klebstoffverbindung an der Außenoberfläche des Rotorjochs befestigt.

Dadurch wird der technische Vorteil erreicht, dass die Mehrzahl der Permanentmagnete ohne Befestigungsmittel, wie z.B. Schrauben oder Nieten, am Rotorjoch befestigt werden kann, was die Fertigung vereinfacht.

Die Außenoberfläche des Rotorjochs umfasst Oberflächenerhebungen, welche Oberflächensenken zur Fixierung einer Klebstoffschicht definieren. Dadurch wird der technische Vorteil erreicht, dass der Klebstoff bei seinem Auftrag richtig positioniert wird und so seine maximale Wirkung entfaltet. So wird eine elektrische Maschine bereitgestellt, deren Lebensdauer nochmals gesteigert ist.

In dieser Ausführungsform weist die Außenoberfläche des Rotorjochs Längsrippen auf, durch welche benachbarte Permanentmagnete voneinander beabstandet anordnet sind. Dadurch wird der technische Vorteil erreicht, dass die Mehrzahl der Permanentmagnete in ihren Positionen sicher fixiert ist. Auch dadurch wird die Lebensdauer der elektrischen Maschine gesteigert.

Die Mehrzahl der Permanentmagnete sind Ferritmagnete. Dadurch wird der technische Vorteil erreicht, dass eine besonders kostengünstige elektrische Maschine mit einer hohen Leistung bereitgestellt wird.

In einer vorteilhaften Ausführungsform ist der Rotor als Innenläufer ausgebildet. Dadurch wird der technische Vorteil erreicht, dass die elektrische Maschine einen besonders kompakten Aufbau aufweist, sodass die elektrische Maschine besonders wenig Bauraum beansprucht.

In einer vorteilhaften Ausführungsform steht zumindest ein Abschnitt einer Innenfläche der Ummantelung in Kontakt mit einem Außenflächenabschnitt eines der Permanentmagneten. Dadurch wird der technische Vorteil erreicht, dass zwischen der Ummantelung und den Permanentmagneten keine zusätzliche Zwischenschicht ist, die den Abstand der Permanentmagnete zu Magneten eines Stators vergrößert und so die Wirkung der Magnete reduziert.

Vorteilhafterweise wird die erfindungsgemäße Aufgabe gelöst durch ein Hauskältegerät oder einen Geschirrspüler oder eine Waschmaschine, mit einer derartigen als elektrischer Antriebsmotor ausgebildeten elektrischen Maschine. Dadurch wird der technische Vorteil erreicht, dass das Hausgerät mit einem besonders effizienten elektrischen Antriebsmotor bereitgestellt wird.

Unter einem Hausgerät wird insbesondere ein elektrisches Hausgerät verstanden, also ein durch elektrische Energie betriebener Gebrauchsgegenstand für private oder gewerbliche Nutzung im Haushalt. Mit Hilfe von elektrischer Energie können mit dem Hausgerät eine oder mehrere Aufgaben im Haushalt erledigt werden. Die Hausgeräte werden direkt vom Stromnetz mit Energie versorgt oder sind als transportable Hausgeräte mit Akkumulatoren oder Batterien als Energiespeicher ausgestattet.

Bei den Hausgeräten kann es sich Hausgeräte zur Unterhaltung (Unterhaltungselektronik; auch braune Ware genannt), um Hausgeräte zur Klimatisierung/Heizung (Klimageräte, Heizungen; auch rote Ware genannt) oder um Haushaltsgeräte (auch weiße Ware genannt) handeln. Unter einem Haushaltsgerät wird ein Hausgerät verstanden, das zur Haushaltsführung eingesetzt wird. Das kann ein Haushaltsgroßgerät sein, wie beispielsweise eine Waschmaschine, ein Wäschetrockner, ein Waschtrockner, eine Geschirrspülmaschine, ein Gargerät, eine Dunstabzugshaube oder ein Hauskältegerät, wie z.B. ein Kühlschrank, ein Gefrierschrank oder eine Kühlgefrierkombination. Dabei treibt der elektrische Antriebsmotor z.B. eine Waschtrommel einer Waschmaschine, eine wasserfördernde Pumpe einer Geschirrspülmaschine, einen Ventilator eines Gargeräts oder einer Dunstabzugshaube oder einen Kompressor eines Hauskältegeräts an. Das Haushaltsgerät kann auch ein Haushaltskleingerät sein, wie beispielsweise ein Kaffeevollautomat, eine Küchenmaschine oder ein Staubsauger, in dem der elektrische Antriebsmotor eingesetzt wird.

Weitere Ausführungsbeispiele werden Bezug nehmend auf die beiliegenden Zeichnungen erläutert. Es zeigen:
Fig. 1 eine perspektivische Darstellung eines Hausgeräts.,
Fig. 2 eine Schnittdarstellung durch einen elektrischen Antriebsmotor des Hausgeräts der Fig. 1,
Fig. 3 eine perspektivische Darstellung eines Rotors des elektrischen Antriebsmotors der Fig. 2,
Fig. 4 eine weitere perspektivische Darstellung eines Rotorjochs des elektrischen Antriebsmotors der Fig. 2 mit Permanentmagneten ,
Fig. 5 eine Explosionsdarstellung des Rotors der Fig. 4,
Fig. 6 eine perspektivische Darstellung einer Ummantelung des Rotors,
Fig. 7 eine stirnseitige Ansicht der Ummantelung der Fig. 6,
Fig. 8 einen Schnitt entlang der Linie F-F der Fig. 7,
Fig. 9 eine Halbschnittdarstellung durch einen elektrischen Antriebsmotor,
Fig. 10 ein erstes Detail der Fig. 9,
Fig. 11 ein zweites Detail der Fig. 9,
Fig. 12 eine weitere Schnittdarstellung durch einen Rotor,
Fig. 13 einen Abschnitt des Rotorjochs, und
Fig. 14 ein Detail der Fig. 13.

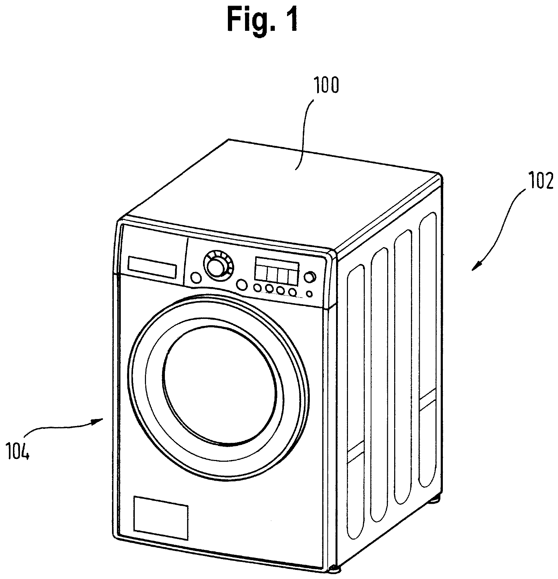

Fig. 1 zeigt eine Waschmaschine als Ausführungsbeispiele für ein Hausgerät 100, dass als Haushaltsgerät ausgebildet ist.

Das Hausgerät 100 weist eine elektrische Maschine 102 als elektrischen Antriebsmotor auf. Im vorliegenden Ausführungsbeispiel treibt die als elektrischer Antriebsmotor ausgebildete elektrische Maschine 102 die Waschtrommel 104 über einen Riemenantrieb an.

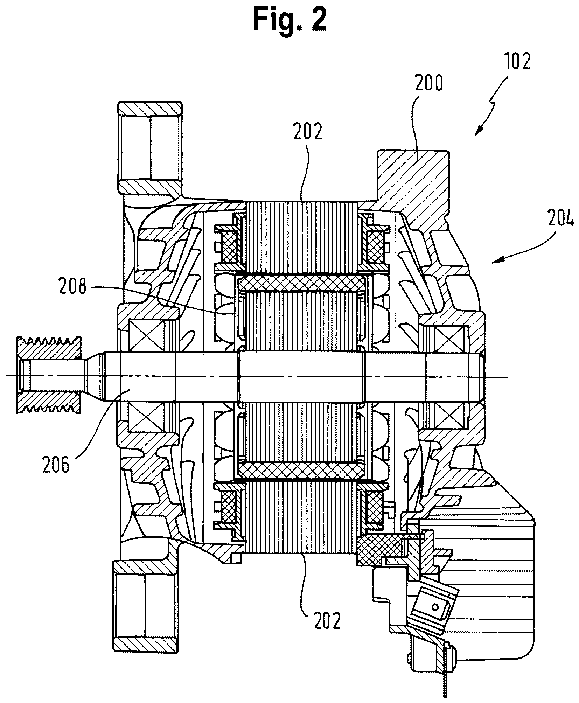

Fig. 2 zeigt einen Schnitt durch ein Ausführungsbeispiel der elektrischen Maschine 102.

Die elektrische Maschine 102 weist im vorliegenden Ausführungsbeispiel einen Stator 200 mit einer Mehrzahl von Elektromagneten 202 auf. Ferner weist die elektrische Maschine 102 einen Rotor 204 auf. Der Rotor 204 ist im vorliegenden Ausführungsbeispiel als Innenläufer ausgebildet. Der Rotor 204 ist im vorliegenden Ausführungsbeispiel mit einer Welle 206 drehfest verbunden.

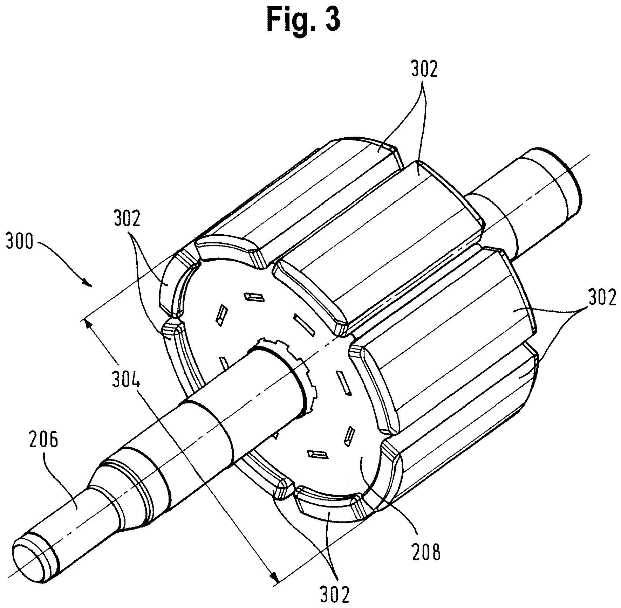

Fig. 3 zeigt ein Ausführungsbeispiel des Rotorjochs 208. Das Rotorjoch 208 des Rotors 204 weist im vorliegenden Ausführungsbeispiel eine im Wesentlichen zylinderförmige Grundform auf. Eine Mantelfläche des Rotorjochs 208 bildet im vorliegenden Ausführungsbeispiel eine Außenoberfläche 300 des zylinderförmigen Rotorjochs 208. An der Außenoberfläche 300 sind im vorliegenden Ausführungsbeispiel acht Permanentmagnete 302 angeordnet, die im vorliegenden Ausführungsbeispiel Ferritmagnete sind. Im vorliegenden Ausführungsbeispiel sind die Permanentmagnete 302 durch eine Klebeverbindung stoffschlüssig mit dem Rotorjoch 208 verbunden. Das Rotorjoch 208 mit den Permanentmagneten 302 weist einen Außendurchmesser 304 auf.

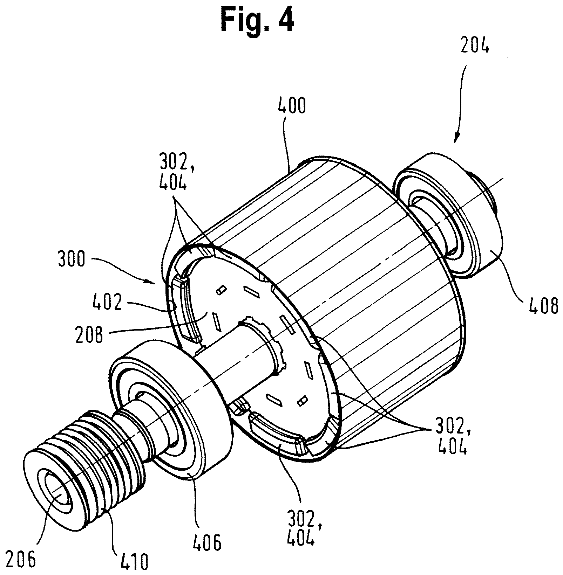

Fig. 4 zeigt ein Ausführungsbeispiel des Rotors 204, bei dem eine Ummantelung 400 die Mehrzahl der Permanentmagnete 302 ringförmig umschließt. Die Ummantelung 400 ist im vorliegenden Ausführungsbeispiel aus einem nicht-magnetischen Material, wie z.B. Stahlblech oder aus Edelstahl, geformt. Im vorliegenden Ausführungsbeispiel ist die Ummantelung 400 als Zylinderhülse ausgebildet, welche die Mehrzahl der Permanentmagnete 302 ringförmig umschließt. Dabei steht im vorliegenden Ausführungsbeispiel die Innenfläche 402 der Ummantelung 400 in Kontakt mit Außenflächenabschnitten 404 der Permanentmagnete 302. Dadurch nimmt im Betrieb der elektrischen Maschine 102 die Ummantelung 400 die Zentrifugalkraft auf, die durch eine Rotation des Rotorjochs 208 auf die Permanentmagnete 302 einwirken. Ferner weist die Welle 206 ein erstes Auflager 406 und ein zweites Auflager 408 zur drehbaren Lagerung des Rotors 204 sowie ein Abtriebsrad 410 auf, z.B. zur direkten Koppelung mit der Waschtrommel 104.

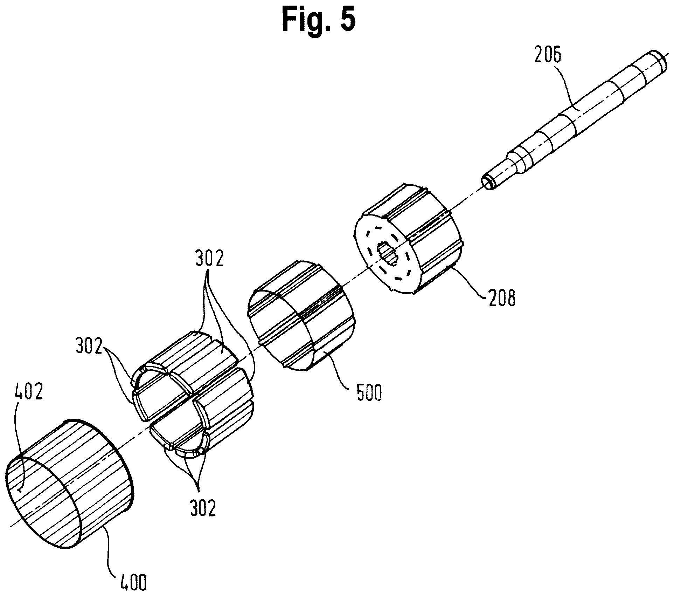

Fig. 5 zeigt den Rotor 204 in einer Explosionsdarstellung. Der Rotor 204 ist zur drehfesten Verbindung mit der Welle 206 ausgebildet und umfasst neben dem Rotorjoch 208 eine Klebstoffschicht 500, mit der die Permanentmagnete 302 am Rotorjoch 208 stoffschlüssig befestigt sind sowie die Ummantelung 400.

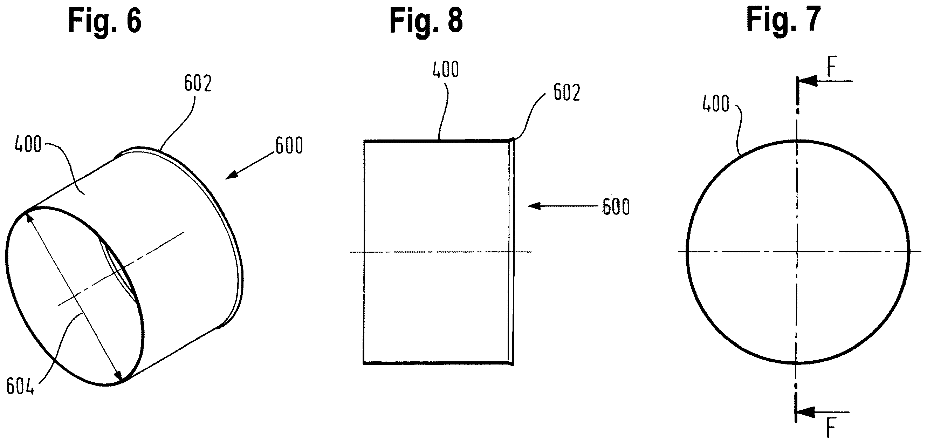

Die Fig. 6 bis 8 zeigen ein Ausführungsbeispiel der Ummantelung 400, das im vorliegenden Ausführungsbeispiel als Zylinderhülse ausgebildet ist und aus einem nicht-magnetischen Material, wie z.B. Stahlblech oder aus Edelstahl, gefertigt ist. Die Ummantelung 400 weist einen Innendurchmesser 604 auf. Im vorliegenden Ausführungsbeispiel ist die Ummantelung 400 an einer Stirnseite 600 radial auswärts erweitert. Diese radial auswärts gerichtete Erweiterung an der Ummantelung 400 der Stirnseite 600 bildet somit eine ringförmige Einführschräge 602 für das Rotorjoch 208 mit den Permanentmagneten 302.

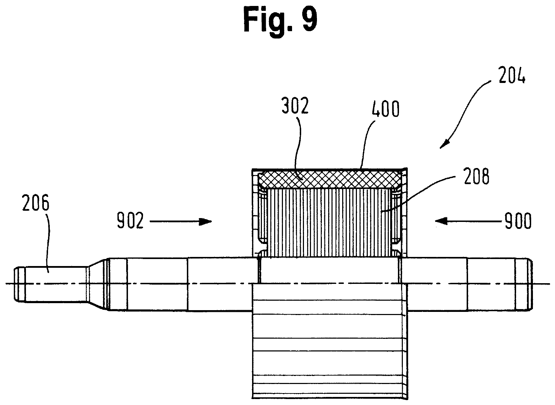

Fig. 9 zeigt ein Ausführungsbeispiel eines Rotors 204 in halbgeschnittener Darstellung. In diesem Ausführungsbeispiel erstreckt sich die Ummantelung 400 in Erstreckungsrichtung der Welle 206 über die gesamte Länge des Rotorjochs 208 in Erstreckungsrichtung der Welle 206 von einer ersten Stirnseite 900 des Rotorjochs 208 bis zu einer zweiten Stirnseite 902 des Rotorjochs 208. Somit überdeckt im vorliegenden Ausführungsbeispiel die Ummantelung 400 die Mehrzahl von Permanentmagneten 302 vollständig.

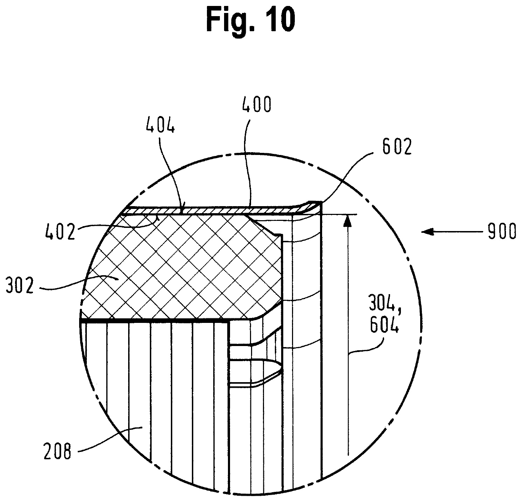

Fig. 10 zeigt ein Detail der Fig. 9, nämlich einen Abschnitt des Rotorjochs 208 an der ersten Stirnseite 900 des Rotors 204. Zu erkennen ist die Einführschräge 602 der Ummantelung 400 sowie, dass im vorliegenden Ausführungsbeispiel die Innenfläche 402 der Ummantelung 400 in Kontakt mit den Außenflächenabschnitten 404 der Permanentmagnete 302 steht.

Die Ummantelung 400 ist im vorliegenden Ausführungsbeispiel ausgebildet, die an der Außenoberfläche 300 angeordneten Permanentmagnete 302 in Presspassung zu halten. Hierzu weist die Ummantelung 400, abgesehen von der Einführschräge 602, einen Innendurchmesser 604 (siehe Fig. 6) auf, der kleiner als der Außendurchmesser 304 (siehe auch Fig. 3) des mit den Permanentmagneten 302 versehenen Rotorjochs 208 ist. Die Einführschräge 602 hingegen erleichtert die Montage der Ummantelung 400 auf einem mit den Permanentmagneten 302 versehenen Rotorjoch 208, wie noch später erläutert wird.

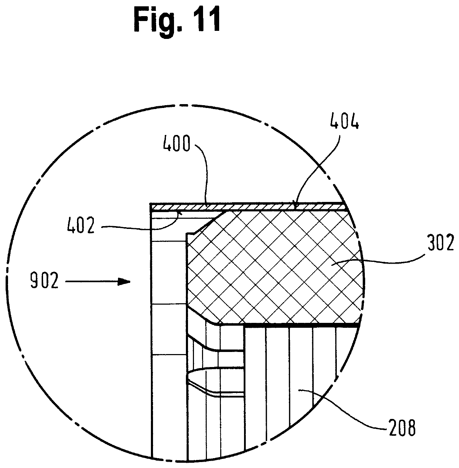

Fig. 11 zeigt ein weiteres Detail der Fig. 9, nämlich einen Abschnitt des Rotorjochs 208 an der zweiten Stirnseite 902 des Rotors 204. Zu erkennen ist, dass im vorliegenden Ausführungsbeispiel ein Abschnitt der Innenfläche 402 der Ummantelung 400 in Kontakt mit den Außenflächenabschnitten 404 der Permanentmagnete 302 steht.

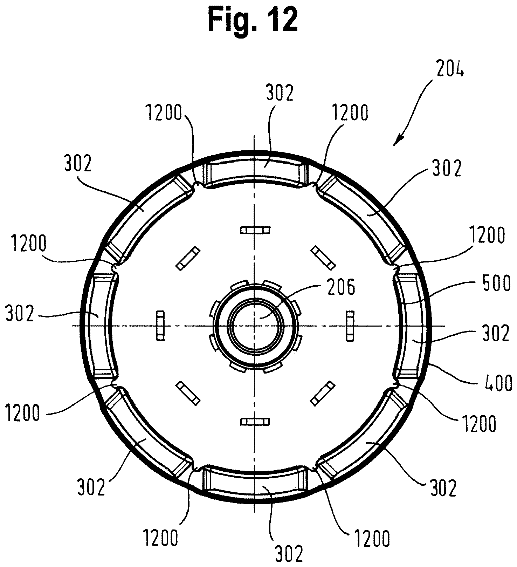

Fig. 12 zeigt eine stirnseitige Ansicht des Rotors 204 mit einem drehfest auf der Welle 206 befestigten Rotorjochs 208, mit an dem Rotorjoch 208 durch die Klebstoffschicht 500 befestigten Permanentmagneten 302 und mit der Ummantelung 400. Ferner zeigt Fig. 12, dass das Rotorjoch 208 im vorliegenden Ausführungsbeispiel acht sich in Erstreckungsrichtung der Welle 206 erstreckende Längsrippen 1200 aufweist. Die Längsrippen 1200 sind im vorliegenden Ausführungsbeispiel auf der Außenoberfläche 300 des Rotorjochs 208 entlang des Umfangs des Rotorjochs 208 gleichmäßig beabstandet angeordnet. Die Längsrippen 1200 treten in Kontakt mit Abschnitten der Permanentmagnete 302, sodass die Permanentmagnete 302 entlang des Umfangs der Rotorjochs 208 gleichmäßig beabstandet voneinander angeordnet sind.

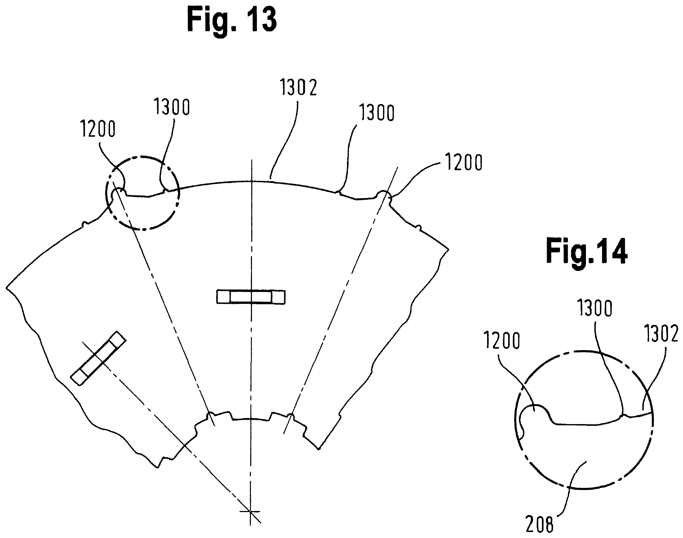

Die Fig. 13 und 14 zeigen ein Ausführungsbeispiel des Rotorjochs 208, bei dem auf der Außenoberfläche 300 des Rotorjochs 208 in Umfangsrichtung zwischen zwei Längsrippen 1200 zwei Oberflächenerhebungen 1300 angeordnet sind, die sich in Erstreckungsrichtung der Welle 206 (siehe Fig. 12) erstrecken. Somit erstrecken sich die Längsrippen 1200 und die Oberflächenerhebungen 1300 im vorliegenden Ausführungsbeispiel parallel zueinander. Ferner erstrecken sich im vorliegenden Ausführungsbeispiel die Längsrippen 1200 in radialer Richtung weiter als die Oberflächenerhebungen 1300. Mit anderen Worten sind die Längsrippen 1200 höher ausgebildet als die Oberflächenerhebungen 1300.

Die Oberflächenerhebungen 1300 definieren Oberflächensenken 1302 zur Fixierung der Klebstoffschicht 500. Zugleich wird durch die Oberflächenerhebungen 1300 ein Luftspalt zwischen dem Rotorjoch 208 und den Permanentmagneten 302 gebildet, der mit der Klebstoffschicht 500 gefüllt ist. Somit weist die Klebstoffschicht 500 eine dem Spalt zwischen dem Rotorjoch 208 und den Permanentmagneten 302 entsprechende Schichtdicke auf. Mit anderen Worten dienen die Längsrippen 1200 der Positionierung der Permanentmagneten 302 in Umfangsrichtung, während die Oberflächenerhebungen 1300 der Positionierung in radialer Richtung der Permanentmagneten 302 dienen.

Im Folgenden wird die Montage der elektrischen Maschine 102 erläutert.

In einem ersten Schritt wird das Rotorjoch 208 mit der Welle 206 verbunden. In einem weiteren Schritt wird die Klebstoffschicht 500 zwischen den Längsrippen 1200 bzw. den Oberflächenerhebungen 1300 auf die Außenoberfläche 300 des Rotorjochs 208 aufgebracht. In einem weiteren Schritt werden die Permanentmagnete 302 zwischen den Längsrippen 1200 angeordnet und soweit radial einwärts verlagert, bis sie in Kontakt mit den Oberflächenerhebungen 1300 treten, sodass diese Verlagerung gestoppt ist. Nun ist der Spalt zwischen dem Rotorjoch 208 und den Permanentmagneten 302 mit der Klebstoffschicht 500 vollständig ausgefüllt. In einem weiteren Schritt wird die Ummantelung 400 mit der Einführschräge 602 an der Stirnseite 600 voran in axialer Richtung der Welle 206 auf das Rotorjoch 208 mit den Permanentmagneten 302 aufgeschoben, bis die Permanentmagnete 302 vollständig von der Ummantelung 400 überdeckt sind. Alternativ kann auch das Rotorjoch 208 mit den Permanentmagneten 302 in die Ummantelung 400 hineingeschoben werden. Dabei erleichtert die Einführschräge 602 die Montage der Ummantelung 400, deren Innenddurchmesser 604 kleiner als der Außendurchmesser 304 des Rotorjochs 208 mit den Permanentmagneten 302 ist, um die Permanentmagnete 302 unter Presspassung zu halten. Nach der Montage der Ummantelung 400 werden die Permanentmagnete 302 durch Presspassung von der Ummantelung 400 gehalten, wobei die Ummantelung 400 in Betrieb der elektrischen Maschine 102 Zentrifugalkräfte kompensiert, die auf die Permanentmagnete 302 wirken.

### Bezugszeichenliste

- 100: Hausgerät
- 102: elektrische Maschine
- 104: Waschtrommel

- 200: Stator
- 202: Elektromagnet
- 204: Rotor
- 206: Welle
- 208: Rotorjoch

- 300: Außenoberfläche
- 302: Permanentmagnet
- 304: Außendurchmesser

- 400: Ummantelung
- 402: Innenfläche
- 404: Außenflächenabschnitt
- 406: Auflager
- 408: Auflager
- 410: Abtriebsrad

- 500: Klebstoffschicht

- 600: Stirnseite
- 602: Einführschräge
- 604: Innendurchmesser

- 900: Stirnseite
- 902: Stirnseite

- 1200: Längsrippe

- 1300: Oberflächenerhebung
- 1302: Oberflächensenke

## Patentansprüche

1. Hausgerät (100) mit einer als elektrischer Antriebsmotor ausgebildeten elektrischen Maschine (102), mit einem Rotor (204), der ein drehbar gelagertes Rotorjoch (208) sowie eine Mehrzahl von Permanentmagneten (302) aufweist, die an einer Außenoberfläche (300) des Rotorjochs (208) angeordnet sind, wobei eine Ummantelung (400) die Mehrzahl der Permanentmagnete (302) umschließt, um eine auf die Mehrzahl der Permanentmagnete (302) bei einer Rotation des Rotorjochs (208) einwirkbare Zentrifugalkraft zumindest teilweise zu kompensieren, wobei die Mehrzahl der Permanentmagnete (302) Ferritmagnete sind und die Ummantelung (400) aus dem nicht-magnetischen Material Stahlblech oder Edelstahl geformt ist, wobei die Mehrzahl der Permanentmagnete (302) auf der Außenoberfläche (300) des Rotorjochs (208) stoffschlüssig befestigt sind, wobei das Rotorjoch (208) sich in der Erstreckungsrichtung der Welle (206) erstreckende Längsrippen (1200) aufweist, wobei die Längsrippen (1200) zur Positionierung der Permanentmagneten (302) in Umfangsrichtung dienen, **dadurch gekennzeichnet, dass** die Außenoberfläche (300) des Rotorjochs (208) Oberflächenerhebungen (1300) umfasst, welche Oberflächensenken (1302) zur Fixierung einer Klebstoffschicht (500) mit einer Schichtdicke definieren, die einem Spalt zwischen dem Rotorjoch (208) und den Permanentmagneten (302) entspricht, wobei
• auf der Außenoberfläche (300) des Rotorjochs (208) in Umfangsrichtung zwischen zwei Längsrippen (1200) zwei Oberflächenerhebungen (1300) angeordnet sind,
• sich die Längsrippen (1200) und Oberflächenerhebungen (1300) parallel zueinander erstrecken, wobei sich die Längsrippen (1200) in radialer Richtung weiter als die Oberflächenerhebungen (1300) erstrecken;
• die Oberflächenerhebungen (1300) Oberflächensenken (1302) zur Fixierung der Klebstoffschicht (500) definieren, so dass ein Spalt zwischen dem Rotorjoch (208) und den Permanentmagneten (302) durch die Oberflächenerhebungen (1300) gebildet ist, der mit einer Klebstoffschicht (500) gefüllt ist;
• die Klebstoffschicht (500) eine dem Spalt zwischen dem Rotorjoch (208) und den Permanentmagneten (302) entsprechende Schichtdicke aufweist, und wobei die Oberflächenerhebungen (1300) zur Positionierung der Permanentmagneten (302) in radialer Richtung dienen.

2. Hausgerät (100) nach Anspruch 1, **dadurch gekennzeichnet, dass** die Ummantelung (400) eine Zylinderhülse ist, welche die Mehrzahl der Permanentmagnete (302) umschließt.

3. Hausgerät (100) nach einem der vorstehenden Ansprüche, **dadurch gekennzeichnet, dass** die Ummantelung (400) unter Presspassung die Mehrzahl der Permanentmagnete (302) umschließt.

4. Hausgerät (100) nach einem der vorstehenden Ansprüche, **dadurch gekennzeichnet, dass** die Ummantelung (400) an einer Stirnseite (600) radial auswärts erweitert ist.

5. Hausgerät (100) nach einem der vorstehenden Ansprüche, **dadurch gekennzeichnet, dass** die Ummantelung (400) die Mehrzahl von Permanentmagneten (302) vollständig überdeckt.

6. Hausgerät (100) nach einem der vorstehenden Ansprüche, **dadurch gekennzeichnet, dass** die Außenoberfläche (300) des Rotorjochs (208) Längsrippen (1200) aufweist, durch welche benachbarte Permanentmagnete (302) voneinander beabstandet anordnet sind.

7. Hausgerät (100) nach einem der vorstehenden Ansprüche, **dadurch gekennzeichnet, dass** der Rotor (204) als Innenläufer ausgebildet ist.

8. Hausgerät (100) nach einem der vorstehenden Ansprüche, **dadurch gekennzeichnet, dass** zumindest ein Abschnitt einer Innenfläche (402) der Ummantelung (400) in Kontakt mit einem Außenflächenabschnitt (404) eines der Permanentmagneten (302) steht.

9. Hausgerät (100) nach einem der vorstehenden Ansprüche, **dadurch gekennzeichnet, dass,** das Hausgerät (100) ein Hauskältegerät oder ein Geschirrspüler oder eine Waschmaschine ist.

10. Hausgerät (100) nach Anspruch 10, **dadurch gekennzeichnet, dass** die als elektrischer Antriebsmotor ausgebildete elektrische Maschine (102) zum Antreiben einer Waschtrommel (104) einer Waschmaschine, einer wasserfördernden Pumpe einer Geschirrspülmaschine, eines Ventilators eines Gargeräts oder einer Dunstabzugshaube oder eines Kompressors eines Hauskältegeräts ausgebildet ist.

## Claims

1. Household appliance (100) with an electric machine (102) embodied as an electric drive motor, with a rotor (204), which has a rotatably mounted rotor yoke (208) as well as a plurality of permanent magnets (302), which are arranged on an external surface (300) of the rotor yoke (208), wherein a cladding (400) surrounds the plurality of permanent magnets (302), in order to at least partially compensate for a centrifugal force that is able to act on the plurality of permanent magnets (302) while the rotor yoke (302) is rotating, wherein the plurality of permanent magnets (302) are ferrite magnets and the cladding (400) is shaped from the non-magnetic material of steel sheet metal or stainless steel, wherein the plurality of permanent magnets (302) are fastened to the external surface (300) of the rotor yoke (208) with a material fit, wherein the rotor yoke (208) has longitudinal ribs (1200) that extend in the extension direction of the shaft (206), wherein the longitudinal ribs (1200) are used to position the permanent magnets (302) in the peripheral direction,
**characterised in that**
the external surface (300) of the rotor yoke (208) comprises raised surface areas (1300), which define depressed surface areas (1302) for the fixing of an adhesive layer (500) with a layer thickness that corresponds to a gap between the rotor yoke (208) and the permanent magnets (302), wherein
• two raised surface areas (1300) are arranged on the external surface (300) of the rotor yoke (208) in the peripheral direction between two longitudinal ribs (1200),
• the longitudinal ribs (1200) and raised surface areas (1300) extend in parallel with one another, wherein the longitudinal ribs (1200) extend further in the radial direction than the raised surface areas (1300);
• the raised surface areas (1300) define depressed surface areas (1302) for the fixing of the adhesive layer (500), meaning that a gap between the rotor yoke (208) and the permanent magnets (302) is formed by the raised surface areas (1300), said gap being filled by an adhesive layer (500);
• the adhesive layer (500) has a layer thickness that corresponds to the gap between the rotor yoke (208) and the permanent magnets (302), and
wherein the raised surface areas (1300) are used to position the permanent magnets (302) in the radial direction.

2. Household appliance (100) according to claim 1, **characterised in that** the cladding (400) is a cylindrical sleeve, which surrounds the plurality of permanent magnets (302).

3. Household appliance (100) according to one of the preceding claims, **characterised in that** the cladding (400) surrounds the plurality of permanent magnets (302) with a press fit.

4. Household appliance (100) according to one of the preceding claims, **characterised in that** the cladding (400) is expanded radially outwards on an end face (600).

5. Household appliance (100) according to one of the preceding claims, **characterised in that** the cladding (400) completely covers the plurality of permanent magnets (302).

6. Household appliance (100) according to one of the preceding claims, **characterised in that** the external surface (300) of the rotor yoke (208) has longitudinal ribs (1200), by way of which adjacent permanent magnets (302) are arranged at a distance from one another.

7. Household appliance (100) according to one of the preceding claims, **characterised in that** the rotor (204) is embodied as an internal rotor.

8. Household appliance (100) according to one of the preceding claims, **characterised in that** at least one section of an internal area (402) of the cladding (400) is in contact with an external area section (404) of one of the permanent magnets (302).

9. Household appliance (100) according to one of the preceding claims, **characterised in that** the household appliance (100) is a household refrigeration appliance or a dishwasher or a washing machine.

10. Household appliance (100) according to claim 10, **characterised in that** the electric machine (102) embodied as electric drive motor is embodied to drive a laundry drum (104) of a washing machine, a water-conveying pump of a dishwasher, a fan of a cooking appliance or an extractor hood or a compressor of a household refrigeration appliance.

## Revendications

1. Appareil ménager (100) avec une machine électrique (102) formée sous la forme d'un moteur d'entraînement électrique, avec un rotor (204) qui présente une culasse de rotor logée en rotation (208) ainsi qu'une pluralité d'aimants permanents (302) disposés sur une surface extérieure (300) de la culasse de rotor (208), dans lequel un revêtement (400) entoure la pluralité d'aimants permanents (302), afin de compenser au moins partiellement une force centrifuge susceptible de s'exercer sur la pluralité d'aimants permanents (302) lors d'une rotation de la culasse de rotor (208), dans lequel la pluralité d'aimants permanents (302) sont des aimants en ferrite et le revêtement (400) est formé en le matériau antimagnétique qu'est la tôle d'acier ou l'acier inoxydable, dans lequel la pluralité d'aimants permanents (302) sont fixés par complémentarité de matières sur la surface extérieure (300) de la culasse de rotor (208), dans laquelle la surface de rotor (208) présente des nervures longitudinales (1200) s'étendant dans la direction d'extension de l'arbre (206), dans lequel les nervures longitudinales (1200) servent au positionnement des aimants permanents (302) dans la direction circonférentielle,
**caractérisé en ce que**
la surface extérieure (300) de la culasse de rotor (208) comprend des élévations de surface (1300), lesquelles définissent des creux de surface (1302) pour la fixation d'une couche d'adhésif (500) selon une épaisseur de couche correspondant à une fente entre la culasse de rotor (208) et les aimants permanents (302), dans lequel
• deux élévations de surface (1300) sont disposées sur la surface extérieure (300) de la culasse de rotor (208) en direction circonférentielle, entre deux nervures longitudinales (1200),
• les nervures longitudinales (1200) et élévations de surface (1300) s'étendent parallèlement les unes aux autres, dans lequel les nervures longitudinales (1200) s'étendent, en direction radiale, plus loin que les élévations de surface (1300) ;
• les élévations de surface (1300) définissent des creux de surface (1302) pour la fixation de la couche d'adhésif (500), de sorte que les élévations de surface (1300) forment entre la culasse de rotor (208) et les aimants permanents (302) une fente comblée par une couche d'adhésif (500) ;
• la couche d'adhésif (500) présente une épaisseur de couche correspondant à la fente entre la culasse de rotor (208) et les aimants permanents (302), et
dans lequel les élévations de surface (1300) servent au positionnement des aimants permanents (302) en direction radiale.

2. Appareil ménager (100) selon la revendication 1, **caractérisé en ce que** le revêtement (400) est un fourreau cylindrique qui entoure la pluralité d'aimants permanents (302).

3. Appareil ménager (100) selon l'une des revendications précédentes, **caractérisé en ce que** le revêtement (400) entoure la pluralité d'aimants permanents (302) sous ajustement forcé.

4. Appareil ménager (100) selon l'une des revendications précédentes, **caractérisé en ce que** le revêtement (400) est élargi radialement vers l'extérieur sur un côté frontal (600).

5. Appareil ménager (100) selon l'une des revendications précédentes, **caractérisé en ce que** le revêtement (400) recouvre intégralement la pluralité d'aimants permanents (302).

6. Appareil ménager (100) selon l'une des revendications précédentes, **caractérisé en ce que** la surface extérieure (300) de la culasse de rotor (208) présente des nervures longitudinales (1200) via lesquelles des aimants permanents (302) voisins sont disposés à distance les uns des autres.

7. Appareil ménager (100) selon l'une des revendications précédentes, **caractérisé en ce que** le rotor (204) est formé sous la forme d'un rotor intérieur.

8. Appareil ménager (100) selon l'une des revendications précédentes, **caractérisé en ce qu'au** moins une section d'une surface intérieure (402) du revêtement (400) se trouve en contact avec une section de surface extérieure (404) de l'un des aimants permanents (302).

9. Appareil ménager (100) selon l'une des revendications précédentes, **caractérisé en ce que** l'appareil ménager (100) est un appareil frigorifique ménager, un lave-vaisselle ou un lave-linge.

10. Appareil ménager (100) selon la revendication 10, **caractérisé en ce que** la machine électrique (102) formée sous la forme d'un moteur d'entraînement électrique est formée pour l'entraînement d'un tambour de lavage (104) d'un lave-linge, d'une pompe à circulation d'eau d'un lave-vaisselle, d'un ventilateur d'un appareil de cuisson ou d'une hotte aspirante, ou d'un compresseur d'un appareil frigorifique ménager.
